# EUROPEAN PATENT APPLICATION

(11) **EP 4 420 962 A1**
(43) Date of publication of application: **28.08.2024**
(21) Application number: 23158709.8
(22) Date of filing: 27.02.2023
(51) Int. Cl.: B62D 35/00

(54) **A SPOILER ARRANGEMENT FOR CONTROLLING THE AERODYNAMIC WAKE AFTER A DRIVING VEHICLE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BRANDT, Adam, 41260 GÖTEBORG (SE); BERGSTRÖM, John, 43159 MÖLNDAL (SE)
(74) Representative: Zacco Sweden AB

(57) **Abstract**

The disclosure relates to a spoiler (1) arrangement for controlling the aerodynamic wake after a driving vehicle comprising: a first side spoiler sheet (2) configured to extend the shape of the vehicle body left side in a general direction backwards, wherein the first side spoiler sheet (2) configured to extend vertically from a first upper point (4) where the vehicle ceiling (10) ends and the left side (11) of the vehicle body begins to a first lower point (6) located along a first transition area (8) between the left side (11) of the vehicle body and the back side (14) of the vehicle body; and a second side spoiler sheet (3) configured to extend the shape of the vehicle body right side in a general direction backwards, wherein the second side spoiler sheet configured to extend vertically from a second upper point (5) where the vehicle ceiling (10) ends and the right side (12) of the vehicle body begins to a second lower point (7) located along a second transition area (9) between the right side of the vehicle body and the back side (14) of the vehicle body; wherein the first lower point (6) and the second lower point (7) are configured to be arranged at a different distance from the vehicle vertical center plane (15) than the first upper point (4) and the second upper point (5), respectively. The disclosure further relates to a vehicle.

## Description

### Technical field

The present disclosure relates to a spoiler arrangement for controlling the aerodynamic wake after a driving vehicle. More specifically, the disclosure relates to a spoiler arrangement for controlling the aerodynamic wake after a driving vehicle as defined in the introductory parts of the independent claims.

### Background art

The aerodynamic load fluctuations on a bluff body moving through air, such as a passenger vehicle, are to a large extent determined by the dynamics of the wake aft the body. Large unsteady wake motions will result in significant load fluctuations. Furthermore, the shape of the wake can indicate some aerodynamic characteristics of the vehicle, such as a higher rear lift for a down-wash dominated wake versus an up-wash dominated wake. Balancing the wake to be neither up-wash nor down-wash dominated has been shown to decrease the aerodynamic drag on simplified geometries (Ahmed body and Windsor model). Balancing the wake is also a common approach for decreasing the aerodynamic drag of real passenger vehicles. However, the simplified geometries with presumably balanced wakes have shown to have bi-stable wake dynamics, where the wake randomly switches between two asymmetrical but mirrored states, also referred to as symmetry breaking modes. A vertical bi-stability was seen for a taller-than-wide base, and a lateral bi-stability for a wide base. Nonetheless, the bi-stable dynamics were seen without yawed flow and the effects disappeared when subjecting the simplified geometries to slight crosswind flows. However, this seems to be geometry dependent since it was shown that adding a slanted rear windscreen angle of 35 deg to the Ahmed body altered the bi-stability to only occur at a narrow crosswind range at a flow angle of 12.5 deg. Real passenger vehicles with slanted rear windscreens have also been shown to exhibit wake bi-stabilities in crosswinds. Bonnavion et al. studied a hatchback vehicle which also exhibited the vertical switching between wake states in a specific range of the relative flow angle. The wake data difference between the states was not as evident as for the simplified bodies, yet two statistically preferred vertical base pressure gradient states were found. The two states were predominantly determined by either an attached or separated flow over the rear windscreen in these crosswind conditions. Similarly, a previous study by the inventor found vertical wake bi-stability in crosswind for a certain roof spoiler geometry on a sports utility vehicle (SUV). The large vertical wake motions were caused by attached in-flow and vortex structures on the lower part of the slanted rear windscreen, especially on the windward side. This roof spoiler was also shown to cause straight-line stability issues when evaluated on the test track, and the study by the inventor correlated the driving stability issues with the large vertical wake motions.

The above suggests that improvements to the current state of the art is desired with the aim of developing stable low-drag vehicles.

### Summary

It is an object of the present disclosure to mitigate, alleviate or eliminate one or more of the above-identified deficiencies and disadvantages in the prior art and solve at least the above mentioned problem. According to a first aspect there is provided a spoiler arrangement for controlling the aerodynamic wake after a driving vehicle comprising: a first side spoiler sheet configured to extend the shape of the vehicle body left side in a general direction backwards, wherein the first side spoiler sheet is configured to extend vertically from a first upper point where the vehicle ceiling ends and the left side of the vehicle body begins to a first lower point located along a first transition area between the left side of the vehicle body and the back side of the vehicle body; and a second side spoiler sheet configured to extend the shape of the vehicle body right side in a general direction backwards, wherein the second side spoiler sheet is configured to extend vertically from a second upper point where the vehicle ceiling ends and the right side of the vehicle body begins to a second lower point located along a second transition area between the right side of the vehicle body and the back side of the vehicle body; wherein the first lower point and the second lower point are configured to be arranged at a different distance from the vehicle vertical center plane than the first upper point and the second upper point, respectively.

The effect of the described geometry of the first side spoiler and the second side spoiler is that the wake behind the vehicle become stabilized when the first side spoiler and the second side spoiler are mounted on a vehicle. This leads to better driving stability of the vehicle without increasing the aerodynamic drag.

By vertical center plane is meant a plane defined by a centerline extending lengthwise along a vehicle's center (i.e. in the driving direction of the vehicle), and a vertical line extending vertically from the central line.

According to some embodiments, the first lower point and the second lower point are configured to be arranged at a longer distance from the vehicle vertical center plane than the first upper point and the second upper point, respectively. This embodiment has the advantage of breaking an inwards flow stabilizing the wake of the vehicle leading to better driving stability of the vehicle.

According to some embodiments, the first lower point and the second lower point are configured to be arranged at a shorter distance from the vehicle vertical center plane than the first upper point and the second upper point, respectively. This embodiment has the advantage of stabilizing the wake of the vehicle leading to better driving stability of the vehicle

According to some embodiments, the first side spoiler sheet has a first upper part and a first lower part and the second side spoiler sheet has a second upper part and a second lower part; wherein the first lower part and the second lower part are configured to be arranged so that their vertical extension downwards has a larger deviation in the lateral direction in comparison to the centerline per vertical extension length unit than the first upper part and the second upper part.

The larger deviation of the first lower part and second lower part in the lateral direction in comparison to the centerline per vertical extension length unit than the first upper part and the second upper part has the effect of enhancing the stabilizing effect more effectively stabilizing the wake of a vehicle having the spoiler arrangement mounted. This leads to better driving stability.

According to some embodiments, the first side spoiler sheet and the second side spoiler sheet are angled in relation to a vertical axis with an angle in the range of 1-45 degrees.

According to some embodiments, the first side spoiler sheet and the second side spoiler sheet are angled in relation to a vertical axis with an angle in the range of 15-45 degrees.

According to some embodiments, the first side spoiler sheet and the second side spoiler sheet are angled in relation to a vertical axis with an angle in the range of 25-45 degrees. The angle may be chosen so that the first side spoiler and the second side spoiler both end close to the widest distance from the vehicle centerline of the vehicle.

A person skilled in the art realizes that the disclose angle ranges are valid for both the out-washed design and the in-washed design. If using the same scale, the in-washed ranges could be described as -1 - -45, -15 - -45 and -25 - -45, respectively.

According to some embodiments, the spoiler arrangement further comprises a top spoiler sheet configured to extend the vehicle ceiling backwards having a lateral extension from the first upper point to the second upper point. The top spoiler sheet will further improve the stabilizing effect on the wake of a vehicle having the spoiler arrangement mounted leading to better driving stability of the vehicle.

According to some embodiments, the first lower point and the second lower point are located above the tail lights of the vehicle. That is usually the point where the vehicle is the widest which will enhancing the stabilizing effect stabilizing the wake of a vehicle having the spoiler arrangement mounted.

According to some embodiments, the first lower point and the second lower point are located at the area of the bumper of the vehicle.

According to some embodiments, the top spoiler sheet is seamlessly attached to the first side spoiler sheet and the second side spoiler sheet to form a continuous spoiler sheet to uniformly form the wake of a vehicle having the spoiler arrangement mounted.

According to some embodiments, the first side spoiler sheet and the second side spoiler sheet are angled in relation to the vertical center plane as they extend backwards to continue the shape of the vehicle body at the location where they are attached to the vehicle body. This may mean that they are angled inwards or outwards dependent on the shape of the vehicle body in a slight funnel shape inwards or outwards in comparison to the vehicle body shape.

According to some embodiments, the first side spoiler sheet and the second side spoiler sheet are angled outwards in relation to the shape of the body shape as they extend backwards. This will increase the aerodynamic drag of the vehicle but enhance the stability of the wake.

According to a second aspect there is provided a vehicle comprising a spoiler according to the first aspect.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a perspective view of an embodiment of the spoiler arrangement according to an embodiment of the present disclosure mounted on a vehicle.
Figure 2 shows a view from the back of an embodiment of the spoiler arrangement according to an embodiment of the present disclosure mounted on a vehicle.
Figure 3 shows a back view of an embodiment of the spoiler arrangement according to an embodiment of the present disclosure mounted on a vehicle where the side spoilers are out-washed.
Figure 4 shows a back view of an embodiment of the spoiler arrangement according to an embodiment of the present disclosure mounted on a vehicle where the side spoilers are in-washed.
Figure 5 shows a principal drawing of a back view of the spoiler arrangement according to an embodiment of the present disclosure of an out-washed design.
Figure 6a shows a principal drawing of a back view of the spoiler arrangement according to an embodiment of the present disclosure of an out-washed design where the lower part of the side spoiler sheets are more out-washed than the upper part of the side spoiler sheets.
Figure 6b shows an enlargement of the left side spoiler sheet in Figure 6a and the angle compared to a vertical axis that the lower part of the side spoiler is out-washed.
Figure 7 shows a principal drawing of a back view of the spoiler arrangement according to an embodiment of the present disclosure of an in-washed design.
Figure 8a shows a principal drawing of a back view of the spoiler arrangement according to an embodiment of the present disclosure of an in-washed design where the lower part of the side spoiler sheets are more in-washed than the upper part of the side spoiler sheets.
Figure 8b shows an enlargement of the left side spoiler sheet in Figure 8a and the angle compared to a vertical axis that the lower part of the side spoiler is in-washed.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

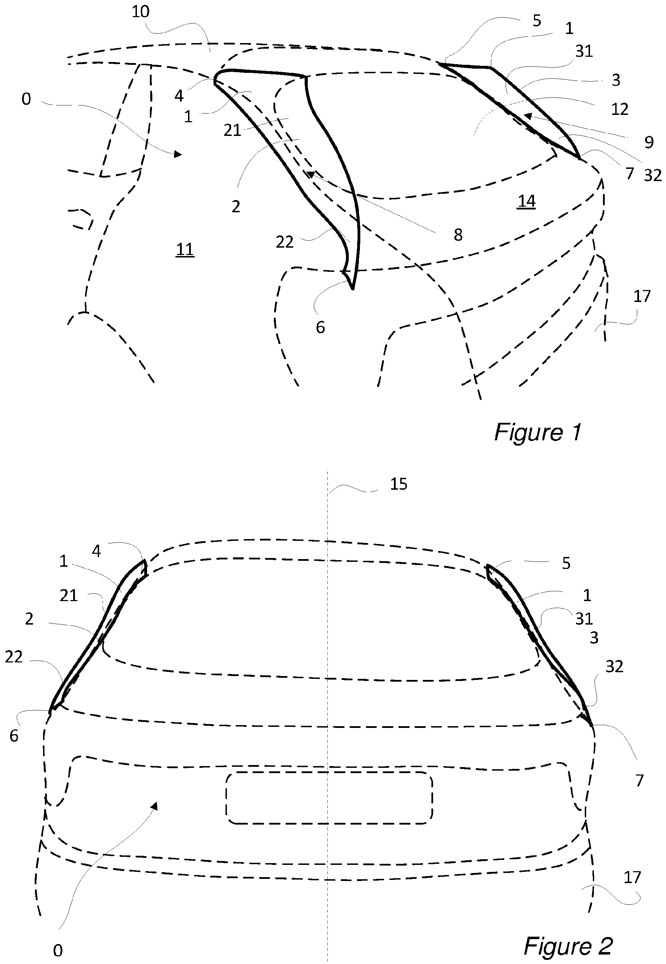

Figures 1 through 8b shows the first aspect of this disclosure disclosing a spoiler 1 for controlling the aerodynamic wake after a driving vehicle 0. The spoiler arrangement 1 comprises a first side spoiler sheet 2 configured to extend the shape of the vehicle body left side in a general direction backwards, wherein the first side spoiler sheet 2 is configured to extend vertically from a first upper point 4 where the vehicle ceiling 10 ends and the left side 11 of the vehicle body begins to a first lower point 6 located along a first transition area 8 between the left side 11 of the vehicle body and the back side 14 of the vehicle body; and a second side spoiler sheet 3 configured to extend the shape of the vehicle body right side in a general direction backwards, wherein the second side spoiler sheet is configured to extend vertically from a second upper point 5 where the vehicle ceiling 10 ends and the right side 12 of the vehicle body begins to a second lower point 7 located along a second transition area 9 between the right side of the vehicle body and the back side 14 of the vehicle body. The first lower point 6 and the second lower point 7 are configured to be arranged at a different distance from the vehicle vertical center plane 15 than the first upper point 4 and the second upper point 5, respectively, a is seen e.g. in Figure 2.

Referring to the Figures 1-3, 5, 6a and 6b the first lower point 6 and the second lower point 7 are configured to be arranged at a longer distance from the vehicle vertical center plane 15 than the first upper point 4 and the second upper point 5, respectively. This is also called an out-washed design as the design will stop the air from following the rounded shape of the aft of the vehicle. See e.g. vehicle 0 in Figures 1 and 2. The described geometry of the first side spoiler and the second side spoiler will break the in-flow of air around the side and stabilize the aerodynamic wake behind the vehicle 0 leading to better driving stability of the vehicle.

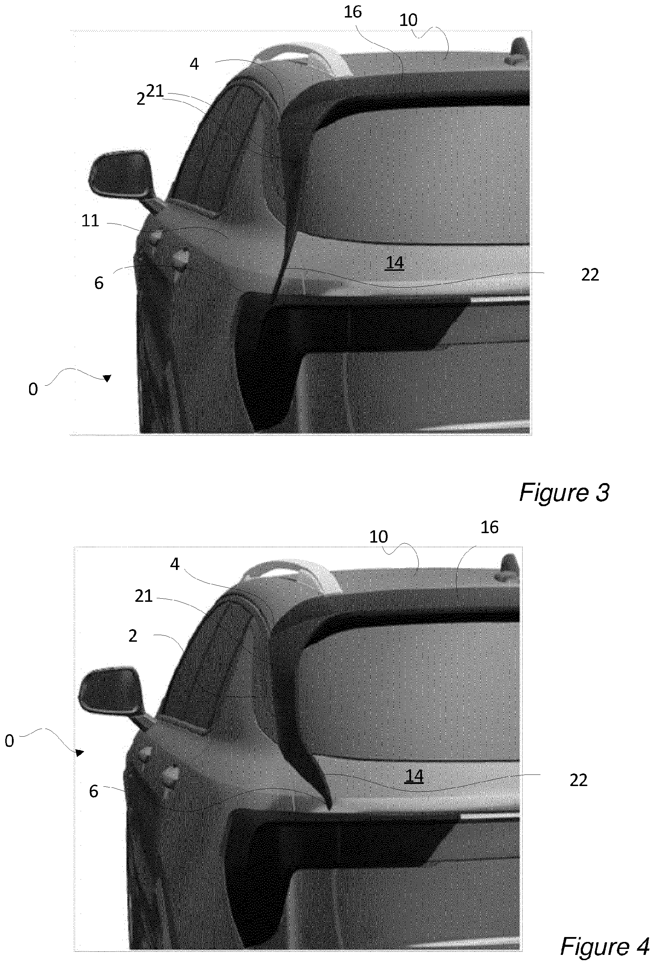

Referring to Figures 4, 7, 8a and 8b the first lower point 6 and the second lower point 7 are configured to be arranged at a shorter distance from the vehicle vertical center plane 15 than the first upper point 4 and the second upper point 5, respectively. This is also called an in-washed design as the design will help the air following around a vehicle aft shape for a vehicle where the vehicle shape causes a bigger out wash than desired. The described geometry of the first side spoiler and the second side spoiler will decrease the aerodynamic drag and stabilize the wake behind the vehicle. This is especially effective on vehicles with rectangular back side cross sections.

In Figures 1-4, 6a 6b, 8a, 8b first side spoiler sheet 2 has a first upper part 21 and a first lower part 22 and the second side spoiler sheet 3 has a second upper part 31 and a second lower part 32; wherein the first lower part 22 and the second lower part 32 are configured to be arranged so that their vertical extension downwards has a larger deviation in the lateral direction in comparison to the vertical center plane 15 per vertical extension length unit than the first upper part 21 and the second upper part 31. The larger deviation of the first lower part 22 and second lower part 32 in the lateral direction in comparison to the centerline per vertical extension length unit than the first upper part and the second upper part has the effect of enhancing the stabilizing effect more effectively stabilizing the wake of a vehicle 0 having the spoiler arrangement mounted.

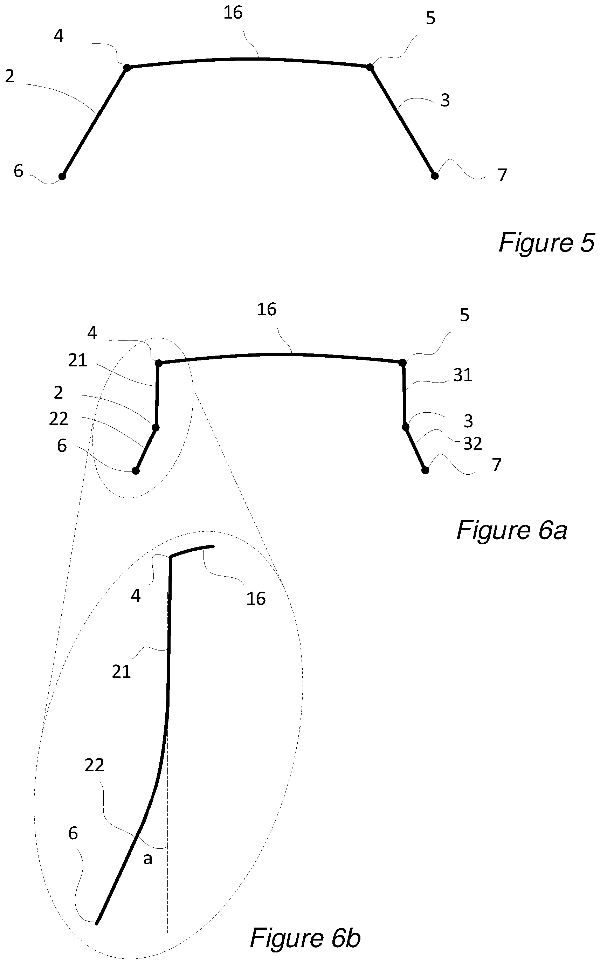

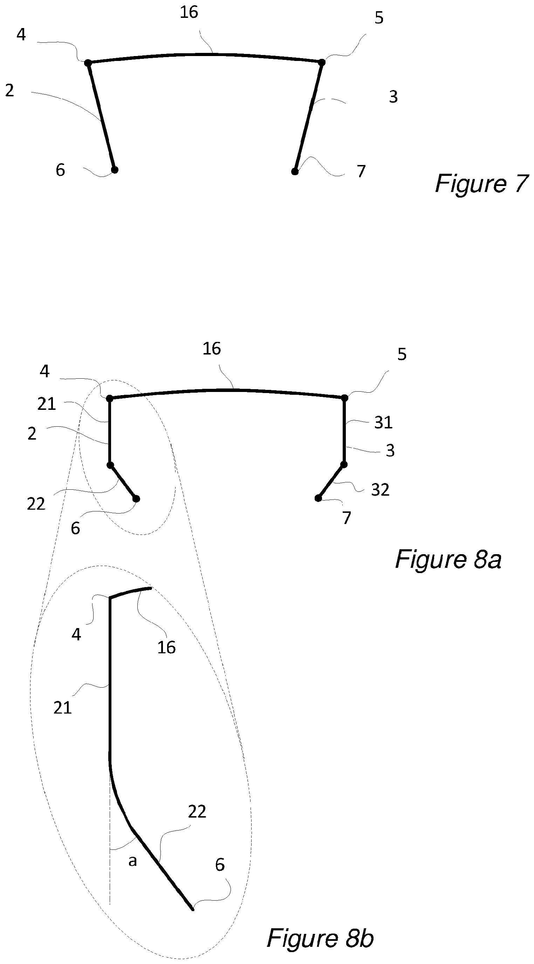

With reference to Figures 1-4, 6a 6b, 8a, 8b the first side spoiler sheet 2 and the second side spoiler sheet 3 are angled in relation to a vertical axis with an angle a, which is clearly seen in Figure 6b and 8b. In some embodiments, for some vehicle body shapes, the first side spoiler sheet 2 and the second side spoiler sheet 3 are angled in the range of 1-45 degrees. In some embodiments, for some other vehicle body shapes, the first side spoiler sheet 2 and the second side spoiler sheet 3 are angled in the range of 15-45 degrees. In some embodiments, for still other vehicle body shapes, the first side spoiler sheet 2 and the second side spoiler sheet 3 are angled in the range of 25-45 degrees. In the spoiler arrangement disclosed in Figures 1 and 2 the angle a is about 40 degrees. A person skilled in the art realizes that the disclose angle ranges are valid for both the out-washed design and the in-washed design. If using the same scale, the in-washed ranges could be described as -1 - -45, -15 - -45 and -25 - - 45, respectively.

With reference to Figures 3 through 8b the spoiler arrangement further comprises a top spoiler sheet 16 configured to extend the vehicle ceiling 10 backwards having a lateral extension from the first upper point 4 to the second upper point 5. The top spoiler sheet 16 is preferably seamlessly attached to the first side spoiler sheet 2 and the second side spoiler sheet 3 to form a continuous spoiler sheet to produce a better aerodynamic shape more smoothly affecting the wake behind the vehicle when driving.

In Figures 1-4 the first lower point 6 and the second lower point 7 are located above the tail lights of the vehicle. For the vehicle 0 disclosed in Figures 1-4 this is a point close to the furthest back area of the vehicle body.

In other embodiments for other body shapes (not shown), the first lower point 6 and the second lower point 7 are located at the area of the bumper 17 of the vehicle.

The first side spoiler sheet 2 and the second side spoiler sheet 3 are angled in relation to the vertical center plane 15 as they extend backwards to continue the shape of the vehicle body at the location where they are attached to the vehicle body. Dependent on the vehicle body shape the angled first side spoiler sheet 2 and the second side spoiler sheet 3 can be angles inwards or outwards.

In some embodiments the first side spoiler sheet 2 and the second side spoiler sheet 3 are angled outwards in relation to the shape of the body shape as they extend backwards in a slight funnel shape. This will enhance the stability of the wake behind the vehicle on the expense of higher aerodynamic drag.

The second aspect of this disclosure shows a vehicle 0 comprising a spoiler 1 according to the first aspect. The person skilled in the art realizes that the present disclosure is not limited to the preferred embodiments described above. The person skilled in the art further realizes that modifications and variations are possible within the scope of the appended claims. For example, a large number of vehicle shapes are feasible on which the spoiler arrangement according to this disclosure can be mounted. In the Figures a SUV vehicle shape is disclosed, however the invention is applicable also to a number of other designs, e.g. sedan or station wagon designs Additionally, variations to the disclosed embodiments can be understood and effected by the skilled person in practicing the claimed disclosure, from a study of the drawings, the disclosure, and the appended claims.

## Claims

1. A spoiler (1) arrangement for controlling the aerodynamic wake after a driving vehicle
comprising:
a first side spoiler sheet (2) configured to extend the shape of the vehicle body left side in a general direction backwards, wherein the first side spoiler sheet (2) is configured to extend vertically from a first upper point (4) where the vehicle ceiling (10) ends and the left side (11) of the vehicle body begins to a first lower point (6) located along a first transition area (8) between the left side (11) of the vehicle body and the back side (14) of the vehicle body; and
a second side spoiler sheet (3) configured to extend the shape of the vehicle body right side in a general direction backwards, wherein the second side spoiler sheet is configured to extend vertically from a second upper point (5) where the vehicle ceiling (10) ends and the right side (12) of the vehicle body begins to a second lower point (7) located along a second transition area (9) between the right side of the vehicle body and the back side (14) of the vehicle body;
wherein the first lower point (6) and the second lower point (7) are configured to be arranged at a different distance from the vehicle vertical center plane (15) than the first upper point (4) and the second upper point (5), respectively.

2. The spoiler arrangement according to claim 1, wherein the first lower point (6) and the
second lower point (7) are configured to be arranged at a longer distance from the vehicle vertical center plane (15) than the first upper point (4) and the second upper point (5), respectively.

3. The spoiler arrangement according to claim 1, wherein the first lower point (6) and the
second lower point (7) are configured to be arranged at a shorter distance from the vehicle vertical center plane (15) than the first upper point (4) and the second upper point (5), respectively.

4. The spoiler arrangement according to any one of the preceding claims, wherein the first
side spoiler sheet (2) has a first upper part (21) and a first lower part (22) and the second side spoiler sheet (3) has a second upper part (31) and a second lower part (32);
wherein the first lower part (22) and the second lower part (32) are configured to be arranged so that their vertical extension downwards has a larger deviation in the lateral direction in comparison to the vertical center plane (15) per vertical extension length unit than the first upper part (21) and the second upper part (31).

5. The spoiler arrangement according to claim 4, wherein the first side spoiler sheet (2)
and the second side spoiler sheet (3) are angled in relation to a vertical axis with an angle (a) in the range of 1-45 degrees.

6. The spoiler arrangement according to claim 4, wherein the first side spoiler sheet (2)
and the second side spoiler sheet (3) are angled in relation to a vertical axis with an angle (a) in the range of 15-45 degrees.

7. The spoiler arrangement according to claim 4, wherein the first side spoiler sheet (2)
and the second side spoiler sheet (3) are angled in relation to a vertical axis with an angle (a) in the range of 25-45 degrees.

8. The spoiler arrangement according to claim any one of the preceding claims, wherein the
spoiler further comprises a top spoiler sheet (16) configured to extend the vehicle ceiling (10) backwards having a lateral extension from the first upper point (4) to the second upper point (5).

9. The spoiler arrangement according to any one of the preceding claims, wherein the first
lower point (6) and the second lower point (7) are located above the tail lights of the vehicle.

10. The spoiler arrangement according to any one of the claims 1-8, wherein the first lower
point (6) and the second lower point (7) are located at the area of the bumper (17) of the vehicle.

11. The spoiler arrangement according to any one of claims 8-10, wherein the top spoiler
sheet (16) is seamlessly attached to the first side spoiler sheet (2) and the second side spoiler sheet (3) to form a continuous spoiler sheet.

12. The spoiler arrangement according to any one of the preceding claims, wherein the first
side spoiler sheet (2) and the second side spoiler sheet (3) are angled in relation to the vertical center plane(15) as they extend backwards to continue the shape of the vehicle body at the location where they are configured to be attached to the vehicle body.

13. The spoiler arrangement according to any one of the preceding claims, wherein the first
side spoiler sheet (2) and the second side spoiler sheet (3) are angled outwards in relation to the shape of the body shape as they extend backwards.

14. A vehicle comprising a spoiler (1) according to any one of the preceding claims.
